# FASCICULE DE BREVET EUROPEEN

(11) **EP 3 546 064 B1**
(45) Date de publication et mention de la délivrance du brevet: **08.01.2025**
(21) Numéro de dépôt: 18305351.1
(22) Date de dépôt: 28.03.2018
(51) Int. Cl.: B01J 19/12, B01D 53/44, B01D 53/72

(54) **PROCEDE DE DEGRADATION PAR VOIE PHOTOCHIMIQUE D'ETHYLENE**
ABBAUVERFAHREN AUF PHOTOCHEMISCHE WEISE MIT ETHYLEN
METHOD FOR PHOTOCHEMICAL DEGRADATION OF ETHYLENE

(43) Date de publication de la demande: 02.10.2019
(73) Titulaire: Absoger, 82100 Les Barthes (FR); Institut National Polytechnique de Toulouse, 31400 Toulouse (FR); Université Paul Sabatier Toulouse III, 31400 Toulouse (FR); Centre National de la Recherche Scientifique CNRS, 75016 Paris (FR)
(72) Inventeur: GERBAUD, Sylvain, 82100 LES BARTHES (FR); BENOIT-MARQUIE, Florence, 31660 BUZET SUR TARN (FR); ANDRIANTSIFERANA, Caroline, 31450 DEYME (FR); DESTRAC, Philippe, 31500 TOULOUSE (FR); LOUBIERE, Karine, 31500 TOULOUSE (FR); LAFOSSAS, Claire, 31000 TOULOUSE (FR); DELMAS, Henri, 31400 TOULOUSE (FR); MANERO, Marie-Hélène, 31400 TOULOUSE (FR)
(74) Mandataire: Plasseraud IP

(56) Documents cités:
- WO-A1-03/101590
- DE-U1- 29 707 912
- JP-A- H0 985 047
- US-A1- 2007 181 509
- PATHAK NAMRATA ET AL: "Effect of process variables on ethylene removal by vacuum ultraviolet radiation: Application in fresh produce storage", BIOSYSTEMS ENGINEERING, ACADEMIC PRESS, UK, vol. 159, 8 May 2017 (2017-05-08), pages 33 - 45, XP085052143, ISSN: 1537-5110, DOI: 10.1016/J.BIOSYSTEMSENG.2017.04.008
- PATHAK NAMRATA ET AL: "Photocatalytic and Photochemical Oxidation of Ethylene: Potential for Storage of Fresh Produce-a Review", FOOD AND BIOPROCESS TECHNOLOGY ; AN INTERNATIONAL JOURNAL, SPRINGER-VERLAG, NEW YORK, vol. 10, no. 6, 20 February 2017 (2017-02-20), pages 982 - 1001, XP036230775, ISSN: 1935-5130, [retrieved on 20170220], DOI: 10.1007/S11947-017-1889-0

## Description

### Domaine de l'invention

La présente invention porte sur un procédé de dégradation d'éthylène par voie photochimique dans le domaine UV lointain utilisable avec des chambres de stockage et de conservation de fruits climactériques, de légumes, et/ou de fleurs coupées.

### Contexte de l'invention

La maturation d'un fruit correspond à l'ensemble des changements biologiques et physiologiques aboutissant à l'état de maturité d'un fruit, et lui conférant des propriétés organoleptiques spécifiques, telles que sa texture, sa couleur ou son odeur. La maturation est dépendante de l'éthylène et est associée à une augmentation de la respiration cellulaire de ses tissus. Pour un fruit climactérique, un pic de respiration est associé à un pic de production d'éthylène. Pour les fruits climactériques, le pic de production d'éthylène est en partie responsable de la maturation des fruits. Les fruits climactériques sont donc capables de mûrir après avoir été cueillis. Ainsi, ces fruits peuvent être récoltés verts et mûrir durant la période de stockage. Les fruits non climactériques, au contraire, doivent mûrir sur plan et ne sont pas capables de maturation autonome. Les fruits climactériques les plus connus sont : la banane, la pomme, la poire, le kiwi, la tomate, le melon, la pêche, l'abricot et l'avocat.

L'adaptation de la production française de fruits climactériques à un marché mondialisé et la spécialisation croissante des exploitations ont amené les producteurs et expéditeurs à développer des systèmes de stockage et de conservation des fruits, afin d'étaler l'offre annuelle jusqu'à 10 mois après la récolte. La conservation des fruits climactériques est possible grâce au stockage de ces fruits en chambres froides (0-4°C) et sous atmosphère contrôlée (AC : 2-3% O₂, 1-5% CO₂, ULO : 1,2 - 1,8% O₂, 1 - 2% CO₂ ou XLO : 0,7 - 1% O₂, 0,6 - 1,2% CO₂) pour ralentir la respiration et donc la maturation des fruits, et maintenir les propriétés organoleptiques desdits fruits (fermeté, acidité, coloration des fruits). Les fruits climactériques sont mis au froid et sous atmosphère contrôlée le plus rapidement possible. L'atmosphère gazeuse contrôlée est obtenue en quelques jours par injection immédiate d'azote et extraction du CO₂ dès que l'oxygène a été abaissé à quelques %.

La pomme est un fruit climactérique dont la maturation est accompagnée d'une production d'éthylène importante (variable en fonction des variétés, précoces et tardives). Les pommes destinées à la conservation sont donc récoltées avant le pic climactérique, dès le début de la production d'éthylène. A ce moment, la production d'éthylène est très faible mais le fruit est capable de mûrir après détachement de l'arbre, car ce faible niveau stimule un autre système de production d'éthylène, appelé processus d'autocatalyse, qui va accélérer le processus de maturation. Or, dans les chambres de stockage, même si la respiration du fruit est ralentie par le froid et l'atmosphère contrôlée, et si la production d'éthylène pré-climactérique est faible, il se produit une accumulation d'éthylène du fait de la quantité importante de fruits confinés. Cette accumulation d'éthylène qui peut atteindre plusieurs centaines de ppm, accélère la maturation des pommes à travers le processus d'autocatalyse, et favorise l'apparition de certaines maladies fongiques et physiologiques. Il est donc essentiel de pouvoir contrôler correctement le niveau d'éthylène dans les chambres froides.

Pour contrôler la concentration en éthylène, différents procédés sont à ce jour utilisés comme par exemple, l'adsorption sur charbon actif, l'oxydation thermique avec ou sans catalyse par métal précieux ou l'oxydation par du permanganate de potassium présent sous forme de cristaux ou en imprégnation sur des matériaux divers. Cependant ces procédés ont un coût de fonctionnement, notamment énergétique, élevé et leurs performances sont telles que la concentration en éthylène dans l'atmosphère contrôlée n'est pas toujours satisfaisante. De plus ces procédés doivent être stoppés fréquemment car il est nécessaire de remplacer ou régénérer les composés actifs (adsorbant, catalyseur ou oxydant).

D'autres procédés, tel que le traitement Smartfresh TM, font appel à des réactifs chimiques appliqués directement sur les fruits. Ces procédés peuvent être efficaces mais sont chers, et leur mise en oeuvre sur l'ensemble des fruits stockés reste difficile à réaliser. De plus, ces dispositifs ne sont pas autorisés en agriculture biologique, et ils peuvent avoir des effets secondaires non désirés (brunissement de certaines variétés de pommes).

Un procédé consistant à abaisser au maximum la teneur en O₂ (<0,7%) de l'atmosphère contrôlée de la chambre de stockage sans induire la fermentation du fruit est actuellement commercialisé. Cependant ce procédé est cher et exige une régulation fine et donc une excellente étanchéité de la chambre de stockage ce qui n'est pas toujours possible dans le cas d'installations anciennes.

Différents procédés pour dégrader l'éthylène accumulé par des procédés catalytiques ont été développés et certains sont actuellement commercialisés. Cependant ces procédés nécessitant l'utilisation d'un catalyseur présentent des inconvénients qui peuvent être variables en fonction du catalyseur utilisé. Par exemple, certains procédés sont très énergivores car le catalyseur doit être chauffé continuellement entre 200°C et 250°C pour être actif, ceci a pour conséquence de chauffer l'atmosphère soutirée de la chambre de stockage pour la traiter. Cette atmosphère doit ensuite être refroidie entre 0°C et 4°C avant d'être réintroduite dans la chambre de stockage. De plus, après dégradation de l'éthylène par ce type de procédé catalytique, la concentration résiduelle en éthylène n'est pas satisfaisante pour le stockage des pommes. D'autres procédés catalytiques mettent en jeu des photocatalyseurs tel que le TiO₂ mais plusieurs contraintes technologiques rendent leur mise en oeuvre complexe avec des efficacités insuffisantes.

Pathak Namrata et al. ("effect of process variables on ethylene removal by vacuum ultraviolet radiation : application in fresh produce storage", Biosystems Engineering, Academic Press, UK, vol. 159, 8 mai 2017, pages 33-45) décrit un réacteur utilisé pour diminuer la concentration d'éthylène dans un gaz.

Pathak Namrata et al. ("Photocatalytic and photochemical oxidation of ethylene: potential for storage of fresh produce - a review", Food and Bioprocess Technology, an international journal, Springer-Verlag, New York, vol. 10, no. 6, 20 février 2017, pages 982-1001) décrit l'utilisation de l'oxydation photochimique et photocatalytique de l'éthylène pour la conservation des produits frais.

Il existe donc un besoin pour un procédé de dégradation de l'éthylène accumulé dans une chambre de stockage de fruits climactériques qui soit efficace durant toute la période de stockage des fruits dans la chambre de stockage et qui soit économique énergétiquement.

De façon surprenante, la Demanderesse a trouvé un procédé qui répond à ce besoin.

L'invention porte donc sur un procédé de traitement par voie photochimique d'une atmosphère gazeuse d'une enceinte close comprenant de l'éthylène, ledit procédé étant mis en oeuvre dans une installation comprenant un réacteur et l'enceinte close étanche et stockant des fruits, des légumes et/ou des fleurs coupées à des températures de 0°C à 15°C sous l'atmosphère gazeuse, ledit réacteur comprenant:
- une paroi latérale présentant une forme cylindrique selon un axe de révolution (Ox) et deux parois frontales, la paroi latérale et les parois frontales délimitant un espace interne réactionnel,
- un port d'entrée de gaz et un port de sortie de gaz, et
- une source de rayonnement ultraviolet dans l'espace interne réactionnel,

ladite chambre de stockage étant fluidiquement connectée au port d'entrée de gaz et au port de sortie de gaz du réacteur,
l'installation étant caractérisée en ce que
la source de rayonnement ultraviolet émet un rayonnement dans l'ultraviolet lointain dont le domaine spectral est compris entre 160 nm et 180 nm et présente une puissance variable, en particulier de 10 W à 500 W,
et en ce que
le port d'entrée de gaz comprend une partie formée par un conduit cylindrique dont une génératrice est tangente à une section transversale de la paroi latérale et permet une introduction tangentielle d'une atmosphère gazeuse dans l'espace interne réactionnel pour créer un écoulement tourbillonnaire de l'atmosphère gazeuse dans l'espace interne réactionnel pour un débit de l'atmosphère gazeuse dans l'espace interne réactionnel du réacteur de 60 m³/h à 150 m³/h ;
ledit procédé comprenant au moins un cycle comprenant les étapes suivantes :
   a) soutirage de l'atmosphère gazeuse de l'enceinte close,
   a1) introduction de l'atmosphère gazeuse comprenant l'éthylène dans l'espace interne réactionnel (4) du réacteur (1) via le port d'entrée de gaz (5) avec un débit d'atmosphère gazeuse dans l'espace interne réactionnel (4) du réacteur (1) de 60 m³/h à 150 m³/h de manière à créer l'écoulement turbulent caractérisé par un nombre de Reynolds supérieur à 5000 et par une intensité tourbillonnaire non nulle de l'atmosphère gazeuse dans l'espace interne réactionnel (4) du réacteur (1),
   b) traitement de l'atmosphère gazeuse pour obtenir une atmosphère gazeuse traitée,
   b1) extraction de l'atmosphère gazeuse traitée via le port de sortie de gaz (6),
   c) introduction de l'atmosphère gazeuse traitée dans l'enceinte close,
caractérisé en ce que l'étape b) de traitement est une étape de dégradation photochimique de l'éthylène réalisée par la source de rayonnement ultraviolet et dans lequel le temps de séjour dans l'espace interne réactionnel (4) du réacteur (1) est de 0,05 s à 60 s, en particulier de 0,10 s à 25 s, tout particulièrement de 0,15 s à 0,35 s.

Ce procédé permet de dégrader l'éthylène d'une atmosphère gazeuse de sorte que, en sortie du réacteur, la concentration en éthylène dans l'atmosphère gazeuse est inférieure à 5 ppm, en particulier inférieure à 2 ppm, plus particulièrement inférieure à 1 ppm, et plus particulièrement encore inférieure à 0,03 ppm. Ces très faibles valeurs de concentration en éthylène sont particulièrement adaptées à la conservation des fruits climactériques, des légumes et des fleurs coupées, en particulier les pommes et les kiwis.

De façon avantageuse ces très faibles valeurs de concentration en éthylène dans l'atmosphère gazeuse en sortie du réacteur peuvent être maintenues en continu pendant environ 1 an, c'est à dire pendant toute la période de stockage des fruits dans la chambre de stockage, et sans maintenance particulière du réacteur de l'invention.

De plus, grâce à la puissance variable de la source de rayonnement ultraviolet, il est possible d'ajuster la puissance du rayonnement émis dans l'ultraviolet lointain au flux d'éthylène introduit ou présent dans l'espace interne réactionnel du réacteur.

Cet ajustement permet de diminuer la consommation d'énergie de la source de rayonnement ultraviolet et de préserver sa durée de vie.

Cet ajustement de puissance permet également d'ajuster la concentration en éthylène dans la chambre de stockage et donc de pouvoir maîtriser la cinétique de maturation des fruits, des légumes et/ou des fleurs coupées stockées dans cette chambre de stockage.

De plus, le fonctionnement du réacteur selon l'invention ne nécessite pas de chauffage, il est donc peu énergivore, et en particulier moins énergivore que le fonctionnement d'un réacteur de catalyse qui doit être chauffé en permanence à la température d'activation du catalyseur.

### Figures

La Figure 1 est une projection axonométrique illustrant schématiquement un réacteur de dégradation de l'éthylène selon la présente invention.
La Figure 2a est une projection illustrant schématiquement une coupe transversale selon l'axe (Ox) d'un repère orthogonal (O, x, y, z) du réacteur de dégradation de l'éthylène selon la présente invention.
La Figure 2b est une coupe selon l'axe AA' de la Figure 2a.
La Figure 3 est une projection illustrant schématiquement une coupe transversale selon l'axe (Ox) d'un repère orthogonal (O, x, y, z) d'un mode de réalisation du réacteur de dégradation de l'éthylène selon la présente invention.
La Figure 4a est une projection illustrant schématiquement une coupe transversale selon l'axe (Ox) d'un repère orthogonal (O, x, y, z) du réacteur de dégradation de l'éthylène selon la présente invention. Pour des raisons de simplicité, la paroi latérale du réacteur présente une forme cylindrique circulaire droite.
La Figure 4b est une coupe selon l'axe AA' de la Figure 4a.
La Figure 5 est un graphe illustrant la diminution au cours du temps de la concentration en éthylène dans l'atmosphère gazeuse d'une enceinte close, l'atmosphère gazeuse étant traitée dans un réacteur de dégradation de l'éthylène selon la présente invention.
La Figure 6 est un graphe illustrant la diminution au cours du temps de la concentration en éthylène dans l'atmosphère gazeuse d'une chambre de stockage industrielle, l'atmosphère gazeuse étant traitée dans un réacteur de dégradation de l'éthylène selon la présente invention.

### Description détaillée

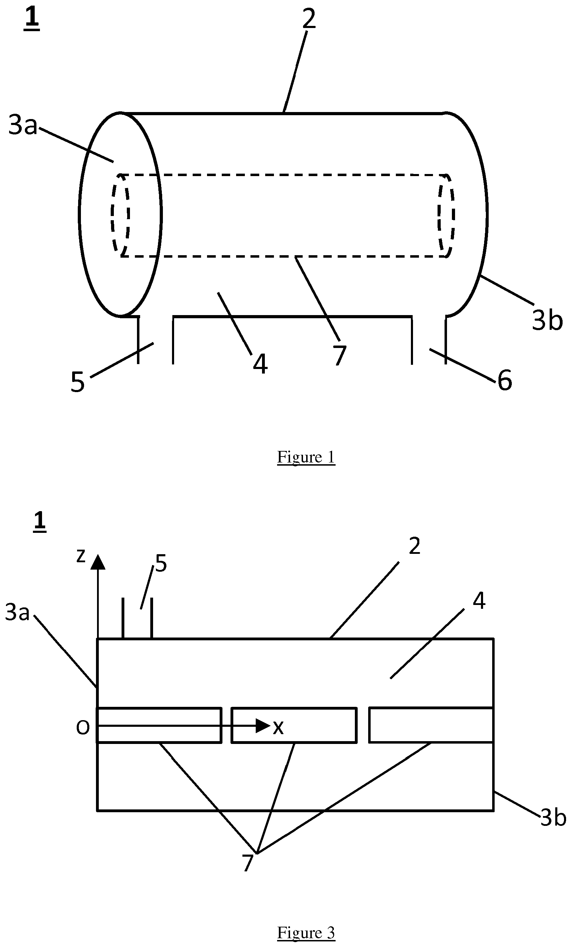

La présente invention est décrite en référence aux Figures 1 à 4b. Pour des raisons de simplicité, la paroi latérale du réacteur de la présente invention est illustrée avec une forme cylindrique circulaire droite.

Le procédé de l'invention met en oeuvre un réacteur **1** comprenant:
- une paroi latérale **2** présentant une forme cylindrique selon un axe de révolution (Ox) et deux parois frontales **3a** et **3b**, la paroi latérale **2** et les parois frontales **3a** et **3b** délimitant un espace interne réactionnel **4**,
- un port d'entrée de gaz **5** et un port de sortie de gaz **6**, et
- une source de rayonnement ultraviolet 7 dans l'espace interne réactionnel **4**,
caractérisé en ce que
la source de rayonnement ultraviolet 7 émet un rayonnement dans l'ultraviolet lointain dont le domaine spectral est compris entre 160 nm et 180 nm et présente une puissance variable, en particulier de 10 W à 500 W,
et en ce que
le port d'entrée de gaz **5** comprend une partie formée par un conduit cylindrique dont une génératrice est tangente à une section transversale de la paroi latérale **2** et permet une introduction tangentielle d'une atmosphère gazeuse dans l'espace interne réactionnel **4** pour créer un écoulement tourbillonnaire de l'atmosphère gazeuse dans l'espace interne réactionnel **4** pour un débit de l'atmosphère gazeuse dans l'espace interne réactionnel (4) du réacteur (1) de 60 m³/h à 150 m³/h.

Au sens de la présente invention, on entend par "paroi présentant une forme cylindrique" une paroi en forme générale de cylindre, un cylindre étant une surface engendrée par une droite qui se déplace parallèlement à un axe de révolution (Ox), en s'appuyant sur deux plans fixes. Typiquement, le cylindre peut être un prisme à base polygonale tel qu'un prisme à base triangulaire, à base carrée ou à base rectangulaire. Le cylindre peut également être un cylindre circulaire en particulier un cylindre circulaire droit caractérisé par un rayon *r* et une hauteur *h*. Selon un mode de réalisation spécifique le cylindre est un cylindre circulaire de façon à ce que la paroi présente une forme cylindrique circulaire droite.

Au sens de la présente invention, on entend par "espace interne réactionnel" la partie interne du réacteur **1**, c'est-à-dire le volume compris entre la paroi latérale **2** et les deux parois frontales **3a** et **3b**.

Au sens de la présente invention, on entend par "port d'entrée de gaz" tout élément adapté à introduire une atmosphère gazeuse, dans l'espace interne réactionnel **4** du réacteur **1**.

Au sens de la présente invention, on entend par "port de sortie de gaz" tout élément adapté à extraire une atmosphère gazeuse, de l'espace interne réactionnel **4** du réacteur **1**.

Typiquement le port d'entrée de gaz **5** est adapté pour être connecté à une conduite de gaz, Par exemple, le port d'entrée de gaz **5** peut être un raccord gaz.

Typiquement le port de sortie de **6** est adapté pour être connecté à une conduite de gaz. Par exemple, le port de sortie de gaz **6** peut être un raccord gaz.

Au sens de la présente invention, on entend par "atmosphère gazeuse" un mélange comprenant différents composés gazeux en particulier comprenant un mélange d'azote (N₂), de dioxyde de carbone (CO₂), d'oxygène (O₂), d'eau (H₂O) et éthylène (C₂H₄). Typiquement, l'atmosphère gazeuse peut être une atmosphère gazeuse contrôlée de chambre de stockage comprenant de 0,7% à 3% O₂, de 1% à 5% CO₂, de 80 à 100% humidité relative (HR) d'H₂O, et moins de 300 ppm d'éthylène, le reste étant principalement de l'azote (N₂).

Au sens de la présente invention, on entend par "chambre de stockage" une enceinte pouvant être close et adaptée pour être étanche et à stocker des fruits, tels que des fruits climactériques, des légumes et/ou des fleurs coupées à des températures de 0°C à 15°C, en particulier de 0°C à 4°C sous atmosphère gazeuse.

Au sens de la présente invention, on entend par "fruit climactérique" un fruit dont la maturation est dépendante de l'éthylène. Les fruits climactériques les plus connus sont : la banane, la pomme, la poire, le kiwi, la tomate, le melon, la pêche, l'abricot et l'avocat.

Au sens de la présente invention, on entend par "rayonnement émis dans l'ultraviolet lointain (aussi noté UV lointain)" un rayonnement dont le domaine spectral est compris entre 160 nm et 180 nm.

De façon avantageuse le rayonnement émis dans l'UV lointain permet la dégradation photochimique de l'éthylène.

Au sens de la présente invention, on entend par "dégradation photochimique (aussi noté dégradation par voie photochimique)" l'ensemble des réactions chimiques permettant la décomposition d'un composé chimique par la lumière, *i.e.* par photolyse et/ou par sa réaction avec des espèces photo-induites, tels que des radicaux ou l'ozone.

Sans être lié par aucune théorie, les inventeurs sont d'avis que la dégradation photochimique de l'éthylène est réalisée par la photolyse de l'éthylène et par l'oxydation de l'éthylène avec l'ozone et des radicaux photo-induits, tels que OH^{•}.

Par rapport au procédé catalytique, la dégradation photochimique est particulièrement avantageuse car elle ne nécessite pas l'utilisation d'un catalyseur solide. La dégradation photochimique est aussi moins énergivore car il n'est pas nécessaire de maintenir ce catalyseur à sa température d'activation.

Au sens de la présente invention, on entend par "source de rayonnement ultraviolet" une source émettant un rayonnement dans l'UV lointain qui peut être de forme générale cylindrique, c'est-à-dire qu'elle comprend une paroi latérale externe présentant une forme cylindrique selon un axe de révolution et deux parois frontales externes et dont le matériau est transparent au rayonnement émis dans l'UV lointain.

Au sens de la présente invention, on entend par "puissance" la puissance radiante du rayonnement UV émis par la source de rayonnement ultraviolet **7**.

Typiquement, l'atmosphère gazeuse comprenant de l'éthylène est introduite dans l'espace interne réactionnel **4** du réacteur **1** *via* le port d'entrée de gaz **5**. L'atmosphère gazeuse est alors soumise au rayonnement émis dans l'UV lointain émis par la source de rayonnement ultraviolet **7**. Le rayonnement émis dans l'UV lointain permet la dégradation photochimique de l'éthylène de l'atmosphère gazeuse. L'atmosphère gazeuse ainsi traitée est ensuite extraite de l'espace interne réactionnel **4** du réacteur **1** *via* le port de sortie de gaz **6**.

Typiquement, en sortie du réacteur **1**, la concentration en éthylène dans l'atmosphère gazeuse traitée est inférieure à 5 ppm, en particulier inférieure à 2 ppm, plus particulièrement inférieure à 1 ppm, et plus particulièrement encore inférieure à 0,03 ppm. Ces faibles valeurs de concentration en éthylène sont particulièrement adaptées à la conservation des fruits climactériques, des légumes et des fleurs coupées, en particulier les pommes et les kiwis.

Comme également expliqué précédemment, l'utilisation du réacteur **1** selon l'invention est peu énergivore, et en particulier moins énergivore qu'un réacteur de catalyse, car il est peut être utilisée sans être chauffé et parce que la puissance de la source de rayonnement ultraviolet 7 est variable.

Selon un mode de réalisation, le réacteur **1** selon l'invention peut comprendre en outre un programmateur adapté pour faire varier la puissance émise par la source de rayonnement ultraviolet 7.

Selon un mode de réalisation particulier, illustré par les Figures 1 à 4, la paroi latérale **2** peut présenter une forme cylindrique droite.

Typiquement, lorsque la paroi latérale **2** présente une forme cylindrique circulaire droite, son rayon *r* est inférieure à 500 mm, en particulier de 10 mm à 250 mm, tout particulièrement de 25 mm à 200 mm, et plus particulièrement encore de 50 mm à 100 mm, et sa hauteur *h* est inférieure à 2000 mm, en particulier de 500 mm à 750 mm, tout particulièrement de 600 mm à 650 mm, et plus particulièrement encore de 615 mm à 625 mm.

Selon un mode de réalisation, les deux ports **5** et **6** sont positionnés sur la paroi latérale **2**.

Selon un mode de réalisation, l'un des deux ports est positionné sur la paroi latérale **2** et l'autre port est positionné sur une paroi frontale **3a** ou **3b**.

Selon un mode de réalisation, le port d'entrée de gaz **5** et le port de sortie de gaz **6** sont positionnés sur la même paroi frontale **3a** ou **3b**.

Selon un mode de réalisation, l'un des deux ports est positionné sur une des deux parois frontales et l'autre port est positionné sur l'autre paroi frontale.

Selon un mode de réalisation spécifique, le port d'entrée de gaz **5** et le port de sortie de gaz **6** peuvent être positionnés aux extrémités opposées du réacteur **1**.

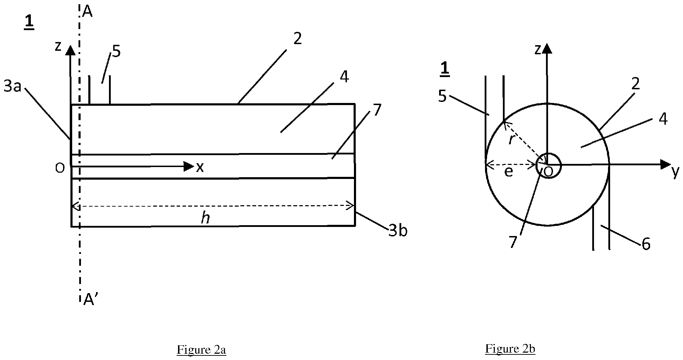

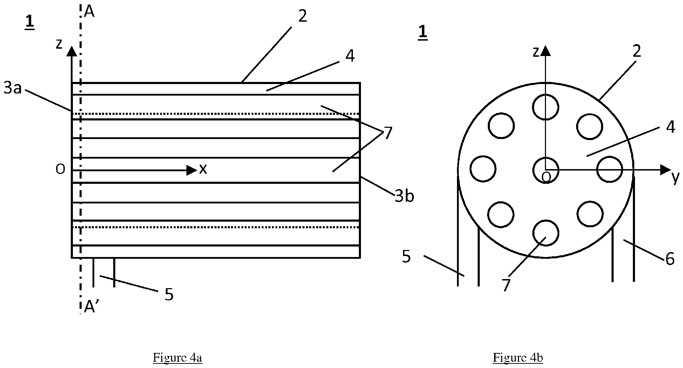

Comme illustré par les Figures 2b et 4b, le port d'entrée de gaz **5** comprend une partie formée par un conduit cylindrique, en particulier cylindrique circulaire droit, dont une génératrice est tangente à une section transversale de la paroi latérale **2**.

Le port d'entrée de gaz **5** permet une introduction tangentielle de l'atmosphère gazeuse dans l'espace intérieur réactionnel **4** créant ainsi un écoulement tourbillonnaire de l'atmosphère gazeuse dans l'espace intérieur réactionnel **4**.

Au sens de la présente invention, on entend par "écoulement tourbillonnaire" un écoulement turbulent caractérisé par un nombre de Reynolds supérieur à 5000 et par une intensité tourbillonnaire non nulle.

L'écoulement tourbillonnaire permet de maximiser le renouvellement de l'atmosphère gazeuse près de la source de rayonnement ultraviolet **7** et de maximiser le temps de séjour de l'atmosphère gazeuse dans l'espace intérieur réactionnel **4**. De façon avantageuse cet écoulement tourbillonnaire permet de maximiser la dégradation photochimique de l'éthylène.

L'homme du métier saura adapter les dimensions de la partie formée par le conduit cylindrique du port d'entrée de gaz **5** et le débit de passage de l'atmosphère gazeuse pour maximiser l'écoulement tourbillonnaire dans l'espace intérieur réactionnel **4**.

Selon un mode de réalisation, illustré par les Figures 2b et 4b, le port de sortie de gaz **6** peut comprendre une partie formée par un conduit cylindrique, en particulier cylindrique circulaire droit, dont une génératrice est tangente à une section transversale de la paroi latérale **2**.

Un port de sortie de gaz **6** selon ce mode de réalisation permet de maximiser l'écoulement tourbillonnaire de l'atmosphère gazeuse dans l'espace intérieur réactionnel **4**.

L'homme du métier saura adapter les dimensions de la partie formée par le conduit cylindrique du port de sortie de gaz **6** et le débit de l'atmosphère gazeuse pour maximiser l'écoulement tourbillonnaire dans l'espace intérieur réactionnel **4**.

Selon un mode de réalisation, le réacteur **1** peut également comprendre des moyens pour maximiser l'écoulement tourbillonnaire dans l'espace intérieur réactionnel **4**.

Typiquement le réacteur **1** peut également comprendre des moyens de fixation adaptés à fixer la source de rayonnement ultraviolet **7** dans l'espace interne réactionnel **4**. Typiquement les parois frontales **3a** et **3b** du réacteur **1** comprennent ces moyens de fixation.

Selon un mode de réalisation, illustré sur les Figures 1 à 4, la source de rayonnement ultraviolet 7 comprend une paroi externe présentant une forme cylindrique circulaire droite.

Selon ce mode de réalisation, le rayon de la paroi externe de source de rayonnement ultraviolet **7** est supérieur à 1 mm, en particulier de 10 mm à 50 mm, tout particulièrement de 20 mm à 25 mm, et sa hauteur est inférieure à 2000 mm, en particulier de 500 mm à 750 mm, tout particulièrement de 600 mm à 650 mm, et plus particulièrement encore de 615 mm à 625 mm.

Comme illustré sur les Figures 1 à 2b, lorsque la paroi latérale **2** présente une forme cylindrique droite et la paroi externe de la source de rayonnement ultraviolet 7 présente une forme cylindrique circulaire droite, alors leurs axes de révolution peuvent être confondus. De façon avantageuse cela permet d'homogénéiser la dégradation photochimique l'éthylène.

Au sens de la présente invention, on appelle "entrefer" la distance entre la paroi latérale **2** et la paroi externe de la source de rayonnement ultraviolet **7** dans le plan orthogonal à l'axe de révolution (Ox). L'entrefer "e" est illustré sur la Figure 2a.

Selon un mode de réalisation spécifique, l'entrefer est de 1 mm à 499 mm, en particulier de 10 mm à 250 mm, plus particulièrement de 20 mm à 100 mm, tout particulièrement de 39 mm.

De façon avantageuse, un entrefer dans ces plages de valeur permet de maximiser l'absorption du rayonnement émis dans l'UV lointain au sein du milieu réactionnel (l'atmosphère gazeuse présente dans l'espace interne réactionnel **4**) et donc de maximiser la dégradation photochimique de l'éthylène.

La source de rayonnement ultraviolet 7 émet un rayonnement ultraviolet dont le domaine spectral est de 160 nm à 180 nm, plus particulièrement de 165 nm à 175 nm.

Selon un mode de réalisation très particulier, la source de rayonnement ultraviolet **7** émet un rayonnement ultraviolet dont le domaine spectral est uniquement de 160 nm à 180 nm, plus particulièrement uniquement de 165 nm à 175 nm.

Typiquement une source de rayonnement ultraviolet 7 peut émettre un rayonnement continu dans l'UV lointain ou émettre un rayonnement dans l'UV lointain sur une ou plusieurs plage(s) des domaines spectraux mentionnés précédemment. Une source de rayonnement ultraviolet 7 peut aussi émettre un rayonnement dans l'UV lointain ayant une ou plusieurs longueur(s) d'onde des domaines spectraux mentionnés précédemment.

Selon un mode de réalisation très spécifique, la source de rayonnement ultraviolet **7** émet un rayonnement ultraviolet dont la longueur d'onde est de 172 nm.

Le spectre d'absorption de l'éthylène présente un maximum d'absorption à 170 nm. De façon avantageuse, les plages de domaine spectral et la longueur d'onde mentionnées ci-dessus permettent une dégradation photochimique de l'éthylène avec une efficacité quantique élevée.

Selon un mode de réalisation, la puissance variable émise par la source de rayonnement ultraviolet **7** est de 12 W à 100 W, en particulier de 15 W à 50 W.

De façon avantageuse, une puissance comprise dans les plages indiquées ci-dessus permet d'obtenir un bon rapport entre le flux d'éthylène dégradé par voie photochimique et le coût énergétique de cette dégradation photochimique.

L'ozone est un produit généré par la dégradation photochimique de l'éthylène lorsque l'atmosphère gazeuse est soumise au rayonnement émis dans l'UV lointain émis par la source de rayonnement ultraviolet **7**. Sa présence peut être positive sur la conservation des fruits climactériques, tels que les pommes (effet sanitaire sur les spores présentes à la surface des fruits), mais peut poser problèmes de sécurité et d'endommagement des matériels compris dans les chambres de stockage. Pour contrôler la concentration d'ozone dans l'atmosphère gazeuse extraite, le réacteur **1** selon l'invention peut comprendre un module d'élimination d'ozone fluidiquement connecté au port de sortie de gaz **6**.

Typiquement ce module d'élimination d'ozone peut comprendre un composé adsorbant capable de décomposer l'ozone en oxygène tel qu'une zéolithe ou du charbon actif.

Selon un mode de réalisation particulier, illustré par la Figure 3, le réacteur **1** peut comprendre *n* sources de rayonnement ultraviolet 7 positionnées selon l'axe de révolution (Ox) du réacteur **1**, *n* étant un nombre entier supérieur ou égale à 2, en particulier de 2 à 50, tout particulièrement de 2 à 10.

Selon un mode de réalisation particulier, illustré par les Figures 4a et 4b, le réacteur **1** peut comprendre *m* sources de rayonnement ultraviolet 7 dans un plan (O, y, z) orthogonal à l'axe de révolution (Ox), *m* étant un nombre entier supérieur ou égale à 2, en particulier de 2 à 50, tout particulièrement de 2 à 10.

Multiplier les sources de rayonnement ultraviolet **7** dans l'espace interne réactionnel **4** permet d'adapter les dimensions du réacteur **1** au volume d'atmosphère gazeuse à traiter.

Selon ce mode de réalisation, la distance entre deux des *m* sources de rayonnement ultraviolet 7 est inférieure ou égale à deux fois l'entrefer, e.

De façon avantageuse, une telle distance entre deux des *m* sources de rayonnement ultraviolet 7 permet de maximiser l'utilisation du rayonnement émis dans l'UV lointain et donc maximiser la dégradation photochimique de l'éthylène.

Typiquement la distance entre deux des *m* sources de rayonnement ultraviolet 7 est de 2 mm à 200 mm, en particulier de 20 mm à 150 mm, plus particulièrement de 40 mm à 100 mm, tout particulièrement de 78 mm.

L'utilisation du réacteur **1** selon l'invention est particulièrement avantageuse lorsque le réacteur **1** selon l'invention est fluidiquement connecté à une chambre de stockage.

Le procédé de l'invention met en oeuvre une installation comprenant le réacteur **1** tel que décrit ci-dessus et une chambre de stockage, la chambre de stockage étant fluidiquement connectée au port d'entrée de gaz **5** et au port de sortie de gaz **6** du réacteur **1**.

Typiquement le réacteur **1** est présent à l'extérieur de la chambre de stockage. Le réacteur **1** peut également être présent dans la chambre de stockage. Ceci permet de diminuer l'encombrement de l'installation, par exemple sur bateau ou dans un avion transportant les fruits, tels que des fruits climactériques, des légumes et des fleurs coupées.

La chambre de stockage et le réacteur **1** fonctionnent en boucle fermée. Ainsi l'atmosphère gazeuse contrôlée de la chambre de stockage comprenant de l'éthylène est soutirée en continu ou séquentiellement de la chambre de stockage pour être introduite dans l'espace interne réactionnel **4** du réacteur **1** *via* le port d'entrée de gaz **5**. Dans l'espace interne réactionnel **4**, l'atmosphère gazeuse contrôlée est soumis au rayonnement émis dans l'UV lointain émis par la source de rayonnement ultraviolet 7. Grâce au rayonnement émis dans l'UV lointain, l'éthylène de l'atmosphère gazeuse contrôlée est dégradé par voie photochimique. L'atmosphère gazeuse contrôlée ainsi traitée est ensuite extraite de l'espace interne réactionnel **4** du réacteur **1** *via* le port de sortie de gaz **6** et est réintroduite en continu ou séquentiellement dans la chambre de stockage. En sortie du réacteur **1**, la concentration en éthylène dans l'atmosphère gazeuse contrôlée traitée est typiquement inférieure à 5 ppm, en particulier inférieure à 2 ppm, plus particulièrement inférieure à 1 ppm, et plus particulièrement encore inférieure à 0,03 ppm.

Comme expliqué ci-dessous, ce fonctionnement en boucle fermée permet de diminuer la concentration en éthylène dans l'atmosphère gazeuse contrôlée de la chambre de stockage jusqu'à une valeur seuil puis de la stabiliser à cette valeur seuil alors que de l'éthylène peut être produit régulièrement par les fruits et/ou les fleurs coupées présents dans la chambre de stockage.

Après l'introduction des fruits, des légumes et/ou des fleurs coupées à stocker dans la chambre de stockage et la fermeture de la chambre de stockage, l'atmosphère gazeuse contrôlée de la chambre de stockage est obtenue par abaissement de la teneur en oxygène (O₂) puis par injection immédiate d'azote (N₂) et extraction du CO₂. Typiquement, la concentration initiale en éthylène dans l'atmosphère gazeuse contrôlée de la chambre de stockage est inférieure à 300 ppm.

La dégradation photochimique de l'éthylène de l'atmosphère gazeuse contrôlée dans l'espace interne **4** du réacteur **1** va permettre d'abaisser la concentration en éthylène dans l'atmosphère gazeuse contrôlée de la chambre de stockage de la valeur initiale à la valeur seuil. Puis, une fois la valeur seuil atteinte, la concentration en éthylène dans l'atmosphère gazeuse contrôlée de la chambre de stockage va se stabiliser à la valeur seuil grâce à la dégradation photochimique de l'éthylène de l'atmosphère gazeuse contrôlée dans l'espace interne **4** du réacteur **1**.

La valeur seuil est typiquement inférieure à 5 ppm, en particulier inférieure à 2 ppm, plus particulièrement inférieure à 1 ppm, et plus particulièrement encore inférieure à 0,03 ppm. Ces faibles valeurs sont particulièrement adaptées à la conservation des fruits climactériques, des légumes et des fleurs coupées, en particulier les pommes et les kiwis. Par conséquent, l'installation selon l'invention est particulièrement adaptée à la conservation des fruits climactériques, des légumes et des fleurs coupées, en particulier les pommes et les kiwis.

De façon avantageuse l'installation selon l'invention est peu énergivore car, comme également expliqué précédemment, la puissance variable de la source de rayonnement ultraviolet **7** peut être ajustée à la concentration de plus en plus faible en éthylène dans l'atmosphère gazeuse contrôlée de la chambre de stockage, et le réacteur **1** selon l'invention peut être utilisé sans être chauffé.

Typiquement l'installation comprend un moyen adapté à réaliser la circulation de l'atmosphère gazeuse contrôlée entre la chambre de stockage et le réacteur **1**.Typiquement ce moyen peut être est un ventilateur, un surpresseur, ou une turbine. Typiquement ce moyen est fluidiquement connecté à la chambre de stockage et au port d'entrée de gaz **5** ou au port de sortie de gaz **6**.

Le débit de circulation dans le réacteur **1** conditionne le taux de renouvellement de l'atmosphère de la chambre stockage.

Si le réacteur **1** selon l'invention comprend le module d'élimination d'ozone décrit ci-dessus, alors ce module est fluidiquement connecté au port de sortie de gaz **6** et à la chambre de stockage.

Ce module d'élimination permet de contrôler la concentration en ozone dans la portion d'atmosphère gazeuse extraite de l'espace interne réactionnel **4** du réacteur **1** qui est réintroduite dans la chambre de stockage. Ceci permet de bénéficier des avantages de la présence d'ozone (effet sanitaire sur les spores présentes à la surface des fruits) sans en avoir les inconvénients (problèmes de sécurité et d'endommagement des matériels compris dans les chambres de stockage).

Typiquement la concentration en ozone dans l'atmosphère gazeuse extraite de l'espace interne réactionnel **4** du réacteur **1** et réintroduite dans la chambre de stockage est inférieure à 2 ppm, en particulier moins de 1 ppm, tout particulièrement de 0,2 ppm à 0,5 ppm.

Il est également décrit l'utilisation d'une source de rayonnement ultraviolet émettant un rayonnement dans l'ultraviolet lointain et présentant une puissance variable pour la dégradation photochimique.

La source de rayonnement ultraviolet est telle que décrite ci-dessus en lien avec la source de rayonnement ultraviolet **7** du réacteur **1** selon le premier aspect de l'invention puis encore dans l'installation décrite précédemment.

Grâce à la puissance variable de la source de rayonnement ultraviolet, il est possible d'ajuster la puissance du rayonnement émis dans l'UV lointain à la quantité d'éthylène à dégrader.

Comme expliqué précédemment, cet ajustement permet de diminuer la consommation d'énergie de la source de rayonnement ultraviolet et de préserver sa durée de vie. Le procédé selon l'invention est donc peu énergivore, et en particulier moins énergivore qu'un procédé catalytique. Cet ajustement de puissance permet également d'ajuster la concentration en éthylène dans une chambre de stockage et donc de pouvoir maîtriser la cinétique de maturation des fruits, des légumes et/ou des fleurs coupées stockées dans cette chambre de stockage.

Le procédé de dégradation de l'éthylène selon l'invention peut être mis en oeuvre sur une atmosphère gazeuse comprenant moins de 300 ppm d'éthylène.

Typiquement la concentration en éthylène dans l'atmosphère gazeuse ayant subi le procédé de dégradation de l'éthylène est inférieure à 5 ppm, en particulier inférieure à 2 ppm, plus particulièrement inférieure à 1 ppm, et plus particulièrement encore inférieure à 0,03 ppm. Ces faibles valeurs de concentration en éthylène sont particulièrement adaptées à la conservation des fruits climactériques, des légumes et des fleurs coupées, en particulier les pommes et les kiwis.

Il est également décrit un procédé de dégradation de l'éthylène comprenant une étape de dégradation photochimique de l'éthylène à l'aide d'une source de rayonnement ultraviolet émettant un rayonnement dans l'ultraviolet lointain et présentant une puissance variable, en particulier de 10 W à 500 W.

La source de rayonnement ultraviolet est telle que décrite ci-dessus en lien avec la source de rayonnement ultraviolet 7 du réacteur **1** selon le premier aspect de l'invention puis encore dans l'installation décrite précédemment.

Grâce à la puissance variable de la source de rayonnement ultraviolet, il est possible d'ajuster la puissance du rayonnement émis dans l'UV lointain à la quantité d'éthylène à dégrader.

Comme expliqué précédemment, cet ajustement permet de diminuer la consommation d'énergie de la source de rayonnement ultraviolet et de préserver sa durée de vie. Le procédé selon l'invention est donc peu énergivore, et en particulier moins énergivore qu'un procédé catalytique. De plus cet ajustement de puissance permet d'ajuster la concentration en éthylène dans une chambre de stockage et donc de pouvoir maîtriser la cinétique de maturation des fruits, des légumes et/ou des fleurs coupées stockées dans cette chambre de stockage.

Le procédé de dégradation de l'éthylène selon l'invention peut être mis en oeuvre sur une atmosphère gazeuse comprenant moins de 300 ppm d'éthylène.

Typiquement la concentration en éthylène dans l'atmosphère gazeuse ayant subi le procédé de dégradation de l'éthylène est inférieure à 5 ppm, en particulier inférieure à 2 ppm, plus particulièrement inférieure à 1 ppm, et plus particulièrement encore inférieure à 0,03 ppm. Ces faibles valeurs de concentration en éthylène sont particulièrement adaptées à la conservation des fruits climactériques, des légumes et des fleurs coupées, en particulier les pommes et les kiwis.

L'invention a pour objet un procédé de traitement par voie photochimique d'une atmosphère gazeuse d'une enceinte close comprenant de l'éthylène, ledit procédé étant mis en oeuvre par le réacteur de dégradation de l'éthylène selon l'invention et comprenant au moins un cycle comprenant les étapes suivantes:
a) soutirage de l'atmosphère gazeuse de l'enceinte close, telle qu'une chambre de stockage, en particulier chambre de stockage de fruits climactériques, de légumes, et/ou de fleurs coupées,
b) traitement de l'atmosphère gazeuse pour obtenir une atmosphère gazeuse traitée,
c) introduction de l'atmosphère gazeuse traitée dans l'enceinte close,
caractérisé en ce que l'étape b) de traitement est une étape de dégradation photochimique de l'éthylène réalisée par une source de rayonnement ultraviolet émettant un rayonnement dans l'ultraviolet lointain dont le domaine spectral est compris entre 160 nm et 180 nm et présentant une puissance variable, en particulier de 10 W à 500 W.

La source de rayonnement ultraviolet est telle que décrite ci-dessus en lien avec la source de rayonnement ultraviolet 7 du réacteur 1 selon le premier aspect de l'invention.

Comme expliqué précédemment, grâce à la puissance variable de la source de rayonnement ultraviolet permettant d'ajuster la puissance du rayonnement émis dans l'UV lointain à la quantité d'éthylène à dégrader, le procédé de traitement par voie photochimique selon l'invention est peu énergivore, et en particulier moins énergivore qu'un procédé catalytique. De plus cet ajustement de puissance permet d'ajuster la concentration en éthylène dans la chambre de stockage et donc de pouvoir maîtriser la cinétique de maturation des fruits, légumes ou fleurs coupées stockées dans cette chambre de stockage

Typiquement lorsque l'enceinte close est une chambre de stockage et que des fruits climactériques y sont stockés, alors de l'éthylène peut être produit en continu par lesdits fruits climactériques.

Ce procédé de traitement selon l'invention peut être mis en oeuvre sur une atmosphère gazeuse comprenant moins de 300 ppm d'éthylène.

Lors de l'étape a), l'atmosphère gazeuse comprenant de l'éthylène est soutirée en continu ou séquentiellement de l'enceinte close pour être traitée lors de l'étape b).

Au cours de l'étape b) de traitement, l'atmosphère gazeuse est soumise au rayonnement émis dans l'UV lointain émis par la source de rayonnement ultraviolet. Grâce au rayonnement émis dans l'UV lointain, l'éthylène de l'atmosphère gazeuse est dégradé par voie photochimique. Typiquement, après l'étape b), la concentration en éthylène dans l'atmosphère gazeuse traitée est inférieure à 5 ppm, en particulier inférieure à 2 ppm, plus particulièrement inférieure à 1 ppm, et plus particulièrement encore inférieure à 0,03 ppm. Ces faibles valeurs de concentration en éthylène sont particulièrement adaptées à la conservation des fruits climactériques et des fleurs coupées, en particulier les pommes et les kiwis.

Selon un mode de réalisation spécifique, l'étape b) peut être réalisée en continu ou séquentiellement.

Selon ce mode de réalisation spécifique, lorsque la concentration en éthylène dans l'atmosphère gazeuse de l'enceinte close est supérieure à la valeur seuil mentionnée ci-dessus, l'étape b) peut être réalisée en continu, puis lorsque la concentration en éthylène dans l'atmosphère gazeuse de l'enceinte close est inférieure à la valeur seuil l'étape b) peut être réalisée séquentiellement. De façon avantageuse cela permet de diminuer le coût énergétique du procédé selon l'invention et de préserver la durée de vie de la source de rayonnement ultraviolet et donc de diminuer le coût économique du procédé.

Typiquement lorsque l'étape b) est réalisée en continu alors le fonctionnement de la source de rayonnement ultraviolet est continu.

Typiquement lorsque l'étape b) est réalisée séquentiellement alors le fonctionnement de la source de rayonnement ultraviolet est caractérisé par une alternance entre des périodes d'allumage et d'extinction de la source de rayonnement.

La source de rayonnement ultraviolet émet un rayonnement ultraviolet dont le domaine spectral est de 160 nm à 180 nm, plus particulièrement de 165 nm à 175 nm.

Selon un mode de réalisation spécifique, lors de l'étape b), la source de rayonnement ultraviolet émet un rayonnement ultraviolet dont la longueur d'onde est de 172 nm.

Le spectre d'absorption de l'éthylène présente un maximum d'absorption à 170 nm. De façon avantageuse, les plages de domaine spectral et la longueur d'onde mentionnées ci-dessus permettent une dégradation photochimique de l'éthylène avec un rendement quantique élevé lors de l'étape b) du procédé.

Typiquement la durée de l'étape b) de traitement est de 0,01 s à 36000 s, en particulier de 0,05 s à 18000 s, tout particulièrement de 0,10 s à 60 s, plus particulièrement encore de 0,15 s à 0,35 s.

De façon avantageuse, une durée de traitement dans les plages mentionnées ci-dessus permet de traiter efficacement l'atmosphère gazeuse soutirée à l'étape a).

L'atmosphère gazeuse traitée est ensuite introduite en continu ou séquentiellement lors de l'étape c) dans l'enceinte close.

Grâce à la répétition du cycle comprenant les étapes a), b et c), la concentration en éthylène dans l'atmosphère gazeuse de l'enceinte close va diminuer jusqu'à atteindre une valeur seuil (régime transitoire) puis se stabiliser à cette valeur seuil (régime stationnaire). Typiquement cette valeur seuil est inférieure à 5 ppm, en particulier inférieure à 2 ppm, plus particulièrement inférieure à 1 ppm, et plus particulièrement encore inférieure à 0,03 ppm. Ces faibles valeurs sont particulièrement adaptées à la conservation des fruits climactériques et des fleurs coupées, en particulier les pommes et les kiwis.

Selon un mode de réalisation particulier, lors du régime transitoire, les étapes a), b) et c) peuvent être réalisées en continu. Ceci permet d'accélérer la diminution de la concentration en éthylène dans l'atmosphère gazeuse de l'enceinte close.

Selon un mode de réalisation particulier, lors du régime stationnaire, les étapes a), b) et c) peuvent être réalisées séquentiellement en fonction de la concentration en éthylène dans l'atmosphère gazeuse de l'enceinte close.

Selon ce mode de réalisation particulier, si la concentration en éthylène dans l'atmosphère gazeuse de l'enceinte close est inférieure à 10% de la valeur seuil, en particulier 5% de la valeur seuil, plus particulièrement 1% de la valeur seuil, alors les étapes a), b) et c) ne sont pas réalisées, et si la concentration en éthylène dans l'atmosphère gazeuse de l'enceinte close est supérieure à 10% de la valeur seuil, en particulier 5% de la valeur seuil, plus particulièrement 1% de la valeur seuil, alors les étapes a), b) et c) sont réalisées afin de diminuer la concentration en éthylène dans l'atmosphère gazeuse de l'enceinte close.

Ce mode de réalisation particulier permet de diminuer le cout énergétique du procédé selon l'invention, ce qui est avantageux lors de la mise en oeuvre prolongée (sur plusieurs mois) du procédé selon l'invention.

Ce procédé de traitement par voie photochimique d'une atmosphère gazeuse comprenant de l'éthylène est mis en oeuvre par le réacteur 1 tel que décrit ci-dessus.

Le procédé de traitement par voie photochimique d'une atmosphère gazeuse comprenant de l'éthylène mis en oeuvre par le réacteur 1 comprend :
entre les étapes a) et b), une étape a1) d'introduction de l'atmosphère gazeuse comprenant l'éthylène dans le réacteur **1** via le port d'entrée de gaz **5** avec un débit d'atmosphère gazeuse dans l'espace interne réactionnel **4** du réacteur **1** de 60 m³/h à 150 m³/h de manière à créer l'écoulement turbulent caractérisé par un nombre de Reynolds supérieur à 5000 et par une intensité tourbillonnaire non nulle de l'atmosphère gazeuse dans l'espace interne réactionnel **4** du réacteur **1**, et
entre les étapes b) et c), une étape b1) d'extaction de l'atmosphère gazeuse traitée via le port de sortie de gaz **6**.

Si le réacteur **1** comprend le module d'élimination d'ozone, alors ce module est fluidiquement connecté au port de sortie de gaz **6** et à l'enceinte close et le procédé comprend, entre les étapes b1) et c), une étape b2) d'élimination de l'ozone produit par la dégradation photochimique de l'éthylène lors de l'étape b).

De façon avantageuse, cette étape b2) d'élimination permet de contrôler la concentration en ozone dans l'atmosphère gazeuse traitée qui est introduite dans l'enceinte close lors de l'étape c).

Typiquement la concentration en ozone dans l'atmosphère gazeuse traitée qui est introduite dans l'enceinte close lors de l'étape c) est inférieure à 2 ppm, en particulier moins de 1 ppm, tout particulièrement de 0,2 ppm à 0,5 ppm.

Si l'enceinte close est une chambre de stockage, en particulier une chambre de stockage de fruits climactériques, ceci permet avantageusement de bénéficier des avantages de la présence d'ozone dans l'enceinte close (effet sanitaire sur les spores présentes à la surface des fruits) sans en avoir les inconvénients (problèmes de sécurité et d'endommagement des matériels compris dans l'enceinte close).

Le débit d'atmosphère gazeuse dans l'espace interne réactionnel **4** du réacteur **1** est de 60 m³/h à 150 m³/h.

De façon avantageuse, un débit dans les plages mentionnées ci-dessus permet de traiter efficacement un important volume de l'atmosphère gazeuse dans l'espace interne réactionnel **4** du réacteur **1**.

Le temps de séjour dans l'espace interne réactionnel **4** du réacteur **1** est de 0,05 s à 60 s, en particulier de 0,10 s à 25 s, tout particulièrement de 0,15 s à 0,35 s.

De façon avantageuse, un temps de séjour dans les plages mentionnées ci-dessus permet de traiter efficacement l'atmosphère gazeuse introduite dans le réacteur **1.**

### Exemples

### Exemple 1 : Expérience de dégradation photochimique de l'éthylène en chambre expérimentale.

La faisabilité de la dégradation photochimique de l'éthylène dans l'UV lointain a tout d'abord été validée dans une chambre expérimentale de stockage.

Le réacteur de dégradation de l'éthylène **1** utilisé est représenté sur le diagramme de la Figure 1. Il comprend une paroi latérale **2** présentant une forme cylindrique selon l'axe de révolution (Ox) circulaire droite et deux parois frontales **3a et 3b**, la paroi latérale **2** et les parois frontales **3a et 3b** délimitant un espace interne réactionnel **4**. Le réacteur **1** comprend en outre un port d'entrée de gaz **5** et un port de sortie de gaz **6**, et une source de rayonnement ultraviolet 7 dans l'espace interne réactionnel **4**. L'entrefer est 39 mm.

La source de rayonnement ultraviolet 7 est une lampe à excimère au xénon émettant un rayonnement d'une longueur d'onde de 172 nm et présentant une puissance variable de 10 W à 100 W.

Le réacteur **1** est fluidiquement connecté, *via* le port d'entrée de gaz **5** et le port de sortie de gaz **6** à la chambre expérimentale de stockage dont l'atmosphère gazeuse comprend initialement 11,5 ppm d'éthylène.

### a) Conditions expérimentales

La température dans chambre expérimentale de stockage est de 2°C et la composition initiale de l'atmosphère gazeuse de la chambre expérimentale de stockage est la suivante :
- N₂ : 97,33 ;
- O₂ : 1,22 %;
- CO₂ : 0,77% ;
- H₂O : 95% humidité relative
- Ethylène : 11,5 ppm.

La chambre de stockage comprend 17 tonnes de pommes.

Durant toute la durée de l'expérience, l'atmosphère gazeuse comprenant de l'éthylène est soutirée en continu de la chambre expérimentale de stockage et introduite dans l'espace réactionnel **4** du réacteur **1** *via* le port d'entrée de gaz **5**. La dégradation photochimique de l'éthylène, dans l'espace réactionnel **4** est réalisée par la source de rayonnement ultraviolet **7**. L'atmosphère gazeuse traitée est ensuite soutirée de l'espace réactionnel **4** *via* le port de sortie de gaz **6** et réintroduite dans la chambre expérimentale de stockage.

La concentration en éthylène dans l'atmosphère gazeuse de la chambre expérimentale de stockage est mesurée et suivie en continu durant toute la durée de l'expérience. Pour cela, 500 µl d'atmosphère gazeuse est soutirée de la chambre expérimentale de stockage toutes les 18 min et sa composition est analysée par un chromatographe en phase gazeuse avec boucle d'injection (Airmo VOC C2-C6, Chromatotec^{®} ; détecteur FID, colonne PLOT Al₂O₃/Na₂SO₄ de 0,53 mm de diamètre).

La puissance de la lampe est fixée à 20 W. Le débit d'introduction de l'atmosphère gazeuse dans le réacteur 1 est de 145 m³/h. Le temps de séjour dans l'espace réactionnel 4 du réacteur 1 est de 0,15 s.

L'expérience est réalisée selon deux modes d'éclairage de la lampe :
- mode d'éclairage continu : la lampe est allumée pendant 24 h, et
- mode d'éclairage séquentiel (réalisé à l'aide d'un programmateur contrôlant la lampe) : après les 24 h du mode continu, la lampe est éteinte pendant 2 h puis allumée pendant 1 h, cette séquence est répétée huit fois avant extinction de la lampe.

### b) Résultats expérimentaux

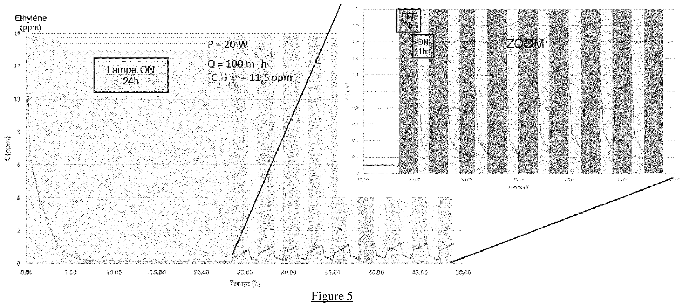

Les résultats expérimentaux sont illustrés sur la Figure 5.

Durant le mode d'éclairage continu, la variation de la concentration en éthylène dans l'atmosphère gazeuse de la chambre expérimentale de stockage peut être divisée en deux régimes:
- un régime transitoire avec une diminution très rapide de la concentration en éthylène, en moins de 10 h, pour atteindre une valeur seuil proche de 0,1 ppm,
- un régime stationnaire, entre 10 h et 24 h (fin du mode continu), avec une stabilité de la concentration en éthylène autour de la valeur seuil proche de 0,1 ppm,

Durant le mode d'éclairage séquentiel:
- lorsque la lampe est éteinte, la concentration en éthylène dans l'atmosphère gazeuse de la chambre expérimentale de stockage augmente et atteint une valeur supérieure à 0,8 ppm ;
- lorsque la lampe est allumée, la concentration en éthylène dans l'atmosphère gazeuse de la chambre expérimentale de stockage diminue très rapidement jusqu'à environ 0,2 ppm; bien que cette valeur soit supérieure à la valeur en mode d'éclairage continu, elle est tout à fait satisfaisante ; et
- la valeur maximale de concentration en éthylène dans l'atmosphère gazeuse de la chambre expérimentale de stockage augmente lors des cinq premières répétitions puis se stabilise à 1 ppm.

### Exemple 2 : Expériences de dégradation photochimique de l'éthylène dans une chambre de stockage industrielle.

Le réacteur **1** de l'Exemple 1 est fluidiquement connecté, *via* le port d'entrée de gaz **5** et le port de sortie de gaz **6** à une chambre de stockage industrielle de 1000 m³ dont l'atmosphère gazeuse comprend initialement entre 45 ppm et 50 ppm d'éthylène.

### a) Conditions expérimentales

La température dans la chambre de stockage industrielle est de 0,4°C et la composition initiale de l'atmosphère gazeuse de l'enceinte close est la suivante:
- N₂ : 97,8 % ;
- O₂ : 1,2 % ;
- CO₂ : 1,0 % ;
- H₂O : 95% humidité relative
- Ethylène : 45-50 ppm.

La chambre de stockage comprend 17 tonnes de pommes.

Durant toute la durée de l'expérience, l'atmosphère gazeuse comprenant de l'éthylène est soutirée en continu de la chambre de stockage industrielle et introduite dans l'espace réactionnel **4** du réacteur **1** *via* le port d'entrée de gaz **5**. La dégradation photochimique de l'éthylène, dans l'espace réactionnel **4** est réalisée par la source de rayonnement ultraviolet **7**. L'atmosphère gazeuse traitée est ensuite soutirée de l'espace réactionnel **4** *via* le port de sortie de gaz **6** et réintroduite dans la chambre de stockage industrielle.

La concentration en éthylène dans l'atmosphère gazeuse de la chambre de stockage industrielle est mesurée et suivie en continu durant toute la durée de l'expérience. Pour cela, 250 ml d'atmosphère gazeuse est soutirée de la chambre de stockage industrielle et la concentration en éthylène dans l'atmosphère gazeuse soutirée est mesurée par un capteur électrocatalytique. Le capteur est composé d'une membrane en nafion nanoporeuse recouvert d'une couche d'or, l'oxydation de l'éthylène sur la membrane libère des protons permettant ainsi de mesurer un courant électrique dans le capteur proportionnel à la concentration en éthylène.

La puissance de la lampe est fixée à 20 W. Le débit d'introduction de l'atmosphère gazeuse dans le réacteur **1** est de 101,5 m³/h. Le temps de séjour dans l'espace réactionnel **4** du réacteur **1** est de 0,15 s.

L'expérience est réalisée selon deux modes d'éclairage de la lampe :
- mode d'éclairage continu : la lampe est allumée pendant 410 h, et
- mode d'éclairage séquentiel (réalisé à l'aide d'un programmateur contrôlant la lampe) : après les 410 h du mode continu, la lampe est éteinte pendant 60 h puis allumée pendant 20 h, cette séquence est répétée deux fois.

### b) Résultats expérimentaux

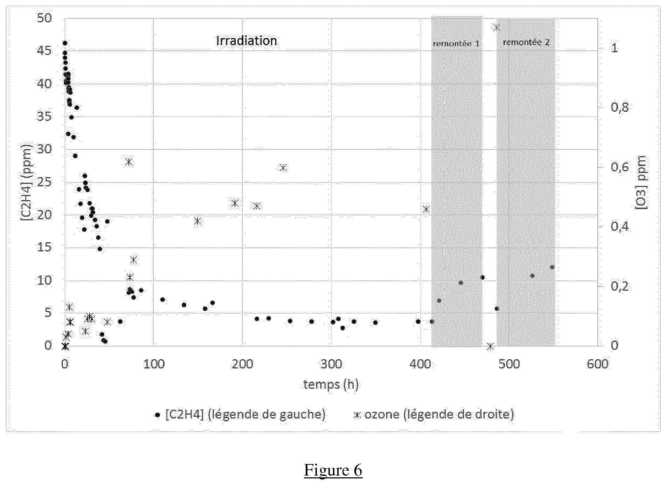

Les résultats expérimentaux sont illustrés sur la Figure 6.

Durant le mode d'éclairage continu, la variation de la concentration en éthylène dans l'atmosphère gazeuse de la chambre de stockage industrielle peut être divisée en deux régimes :
- un régime transitoire avec une diminution très rapide de la concentration en éthylène dans l'atmosphère gazeuse de la chambre de stockage industrielle, en 250 h, pour atteindre une valeur seuil de 3,6 ppm,
- un régime stationnaire, entre 250 h et 410 h (fin du mode continu), avec une stabilité de la concentration en éthylène dans l'atmosphère gazeuse de la chambre de stockage industrielle autour de la valeur seuil de 3,6 ppm,

Durant le mode d'éclairage séquentiel:
- lorsque la lampe est éteinte, la concentration en éthylène dans l'atmosphère gazeuse de la chambre de stockage industrielle augmente jusqu'à 10 ppm;
- lorsque la lampe est allumée, la concentration en éthylène dans l'atmosphère gazeuse de la chambre de stockage industrielle diminue très rapidement jusqu'à environ 5 ppm.

Durant toute l'expérience la concentration en ozone dans l'atmosphère gazeuse de la chambre de stockage industrielle est également suivie. Comme illustrée sur la Figure 6, elle est toujours inférieure à 1 ppm et elle diminue lorsque la lampe est éteinte.

### Exemple 3 : Expérience de dégradation photochimique de l'éthylène dans une chambre de stockage industrielle comprenant des pommes pendant 8 mois.

Le réacteur **1** de l'Exemple 1 est fluidiquement connecté, via le port d'entrée de gaz **5** et le port de sortie de gaz **6** à une chambre de stockage industrielle ayant une capacité de 16 tonnes.

17000 kg de pommes (variété royale gala) sont stockés dans la chambre de stockage industrielle.

Au cours des 8 mois d'expérience, la température dans la chambre de stockage est maintenue entre 0,5°C et 1°C et l'atmosphère gazeuse de la chambre de stockage est contrôlée de sorte à comprendre environ 1% O₂, environ 0,9% CO₂, environ 97% N₂ et à présenter 95% humidité relative.

Durant toute la durée de l'expérience, l'atmosphère gazeuse comprenant de l'éthylène est soutirée en continu de la chambre de stockage industrielle et introduite dans l'espace réactionnel **4** du réacteur **1** *via* le port d'entrée de gaz **5**. La dégradation photochimique de l'éthylène, dans l'espace réactionnel **4** est réalisée par la source de rayonnement ultraviolet **7**. L'atmosphère gazeuse traitée est ensuite soutirée de l'espace réactionnel **4** *via* le port de sortie de gaz **6** et réintroduite dans la chambre de stockage industrielle.

La concentration en éthylène dans l'atmosphère gazeuse de la chambre de stockage industrielle est mesurée et suivie en continu durant toute la durée de l'expérience selon le protocole décrit dans l'Exemple 2.

Après une diminution rapide, la concentration en éthylène dans l'atmosphère gazeuse de la chambre de stockage industrielle est maintenue inférieure à 0,15 ppm pendant 8 mois.

### Exemple 4 : Expérience de dégradation photochimique de l'éthylène dans une chambre de stockage industrielle comprenant des kiwis pendant 2 mois .

Le réacteur **1** de l'Exemple 1 est fluidiquement connecté, via le port d'entrée de gaz **5** et le port de sortie de gaz **6** à une chambre de stockage industrielle ayant une capacité de 16 tonnes.

243 tonnes de kiwis (variété kiwi vert Hayward) sont stockés dans la chambre de stockage industrielle.

Au cours des 2 mois d'expérience, la température dans la chambre de stockage est maintenue entre 0,5°C et 1°C et l'atmosphère gazeuse de la chambre de stockage est contrôlée de sorte à comprendre environ 2,5% O₂, environ 3,5% CO₂, environ 94% N₂ et à présenter 95% humidité relative.

Durant toute la durée de l'expérience, l'atmosphère gazeuse comprenant de l'éthylène est soutirée en continu de la chambre de stockage industrielle et introduite dans l'espace réactionnel **4** du réacteur **1** *via* le port d'entrée de gaz **5**. La dégradation photochimique de l'éthylène, dans l'espace réactionnel **4** est réalisée par la source de rayonnement ultraviolet **7**. L'atmosphère gazeuse traitée est ensuite soutirée de l'espace réactionnel **4** *via* le port de sortie de gaz **6** et réintroduite dans la chambre de stockage industrielle.

La concentration en éthylène dans l'atmosphère gazeuse de la chambre de stockage industrielle est mesurée et suivie en continu durant toute la durée de l'expérience selon le protocole décrit dans l'Exemple 2.

La concentration en éthylène dans l'atmosphère gazeuse de la chambre de stockage industrielle est maintenue inférieure à 0,015 ppm pendant 2 mois.

## Revendications

1. Procédé de traitement par voie photochimique d'une atmosphère gazeuse d'une enceinte close comprenant de l'éthylène, ledit procédé étant mis en oeuvre dans une installation comprenant un réacteur et l'enceinte close étanche et stockant des fruits, des légumes et/ou des fleurs coupées à des températures de 0°C à 15°C sous l'atmosphère gazeuse, ledit réacteur (1) comprenant :
- une paroi latérale (2) présentant une forme cylindrique selon un axe de révolution (Ox) et deux parois frontales (3a, 3b), la paroi latérale (2) et les parois frontales (3a, 3b) délimitant un espace interne réactionnel (4),
- un port d'entrée de gaz (5) et un port de sortie de gaz (6), et
- une source de rayonnement ultraviolet (7) dans l'espace interne réactionnel (4),
ladite chambre de stockage étant fluidiquement connectée au port d'entrée de gaz (5) et au port de sortie de gaz (6) du réacteur (1),
l'installation étant **caractérisée en ce que**
la source de rayonnement ultraviolet (7) émet un rayonnement dans l'ultraviolet lointain dont le domaine spectral est compris entre 160 nm et 180 nm et présente une puissance variable, en particulier de 10 W à 500 W ;
et **en ce que**
le port d'entrée de gaz (5) comprend une partie formée par un conduit cylindrique dont une génératrice est tangente à une section transversale de la paroi latérale (2) et permet une introduction tangentielle de l'atmosphère gazeuse dans l'espace interne réactionnel (4) pour créer un écoulement turbulent **caractérisé par** un nombre de Reynolds supérieur à 5000 et par une intensité tourbillonnaire non nulle de l'atmosphère gazeuse dans l'espace interne réactionnel (4) pour un débit de l'atmosphère gazeuse dans l'espace interne réactionnel (4) du réacteur (1) de 60 m³/h à 150 m³/h ;
ledit procédé comprenant au moins un cycle comprenant les étapes suivantes :
a) soutirage de l'atmosphère gazeuse de l'enceinte close,
a1) introduction de l'atmosphère gazeuse comprenant l'éthylène dans l'espace interne réactionnel (4) du réacteur (1) via le port d'entrée de gaz (5) avec un débit d'atmosphère gazeuse dans l'espace interne réactionnel (4) du réacteur (1) de 60 m³/h à 150 m³/h de manière à créer l'écoulement turbulent **caractérisé par** un nombre de Reynolds supérieur à 5000 et par une intensité tourbillonnaire non nulle de l'atmosphère gazeuse dans l'espace interne réactionnel (4) du réacteur (1),
b) traitement de l'atmosphère gazeuse pour obtenir une atmosphère gazeuse traitée, b1) extraction de l'atmosphère gazeuse traitée via le port de sortie de gaz (6),
c) introduction de l'atmosphère gazeuse traitée dans l'enceinte close,
**caractérisé en ce que** l'étape b) de traitement est une étape de dégradation photochimique de l'éthylène réalisée par la source de rayonnement ultraviolet et dans lequel le temps de séjour dans l'espace interne réactionnel (4) du réacteur (1) est de 0,05 s à 60 s, en particulier de 0,10 s à 25 s, tout particulièrement de 0,15 s à 0,35 s.

2. Procédé selon la revendication 1, dans lequel la paroi latérale (2) présente une forme cylindrique droite.

3. Procédé selon la revendication 2, dans lequel la distance selon un axe transversal du réacteur (1), appelée entrefer, entre la source de rayonnement ultraviolet (7) et la paroi latérale (2) est de 1 mm à 499 mm, en particulier de 10 mm à 250 mm, plus particulièrement de 20 mm à 100 mm, tout particulièrement de 39 mm.

4. Procédé selon l'une quelconque des revendications 1 à 3 comprenant en outre un programmateur adapté pour faire varier la puissance de la source de rayonnement ultraviolet (7).

5. Procédé selon l'une quelconque des revendications 1 à 4 comprenant n sources de rayonnement ultraviolet (7) positionnées selon l'axe de révolution (Ox) du réacteur (1), *n* étant un nombre entier supérieur ou égale à 2.

6. Procédé selon l'une quelconque des revendications 1 à 5 comprenant m sources de rayonnement ultraviolet (7) dans un plan (O, y, z) orthogonal à l'axe de révolution (Ox), m étant un nombre entier supérieur ou égale à 2.

7. Procédé selon l'une quelconque des revendications 1 à 6, dans lequel la concentration en éthylène dans l'atmosphère gazeuse traitée est inférieure à 5 ppm, en particulier inférieure à 2 ppm, plus particulièrement inférieure à 1 ppm, et plus particulièrement encore inférieure à 0,03 ppm.

## Patentansprüche

1. Verfahren zur photochemischen Behandlung einer Gasatmosphäre einer geschlossenen Kammer, umfassend Ethylen, wobei das Verfahren in einer Anlage durchgeführt wird, die einen Reaktor und die geschlossene dichte Kammer umfasst, die Obst, Gemüse und/oder Schnittblumen bei Temperaturen von 0 °C bis 15 °C unter Gasatmosphäre lagert, wobei der Reaktor (1) umfasst:
- eine Seitenwand (2), die eine zylindrische Form entlang einer Rotationsachse (Ox) aufweist, und zwei Stirnwände (3a, 3b), wobei die Seitenwand (2) und die Stirnwände (3 a, 3b) einen Reaktionsinnenraum (4) begrenzen,
- eine Gaseinlassöffnung (5) und eine Gasauslassöffnung (6), und
- eine Ultraviolettstrahlungsquelle (7) in dem Reaktionsinnenraum (4), wobei zwischen der Speicherkammer und der Gaseinlassöffnung (5) und der Gasauslassöffnung (6) des Reaktors (1) eine Fluidverbindung besteht,
wobei die Anlage **dadurch gekennzeichnet ist,**
**dass** die Ultraviolettstrahlungsquelle (7) eine Strahlung im fernen Ultraviolett aussendet, deren Spektralbereich zwischen 160 nm und 180 nm liegt, und eine variable Leistung aufweist, insbesondere von 10 W bis 500 W,
und **dass**
die Gaseinlassöffnung (5) einen Teil umfasst, der durch einen zylindrischen Kanal gebildet wird, dessen eine Mantellinie tangential zu einem Querschnitt der Seitenwand (2) verläuft und eine tangentiale Einführung der Gasatmosphäre in den Reaktionsinnenraum (4) ermöglicht, um eine Wirbelströmung zu erzeugen,
**gekennzeichnet durch** eine Reynolds-Zahl von mehr als 5000 und **durch** eine von Null verschiedene Wirbelintensität der Gasatmosphäre im Reaktionsinnenraum (4) bei einer Durchflussrate der Gasatmosphäre in dem Reaktionsinnenraum (4) des Reaktors (1) von 60 m³/h bis 150 m³/h,
wobei das Verfahren wenigstens einen Zyklus umfasst, der die folgenden Schritte aufweist:
a. Abziehen der Gasatmosphäre aus der geschlossenen Kammer,
a1) Einleiten der Ethylen umfassenden Gasatmosphäre in den Reaktionsinnenraum (4) des Reaktors (1) über die Gaseinlassöffnung (5) mit einer Durchflussrate der Gasatmosphäre in dem Reaktionsinnenraum (4) des Reaktors (1) von 60 m³/h bis 150 m³/h, um die Wirbelströmung zu erzeugen, **gekennzeichnet durch** eine Reynolds-Zahl von mehr als 5000 und **durch** eine von Null verschiedene Wirbelintensität der Gasatmosphäre im Reaktionsinnenraum (1),
b. Behandeln der Gasatmosphäre, um eine behandelte Gasatmosphäre zu erhalten,
b1) Abziehen der behandelten Gasatmosphäre über die Gasauslassöffnung (6),
c. Einleiten der behandelten Gasatmosphäre in die geschlossene Kammer,
**dadurch** gekennzeichnet, dass der Behandlungsschritt b) ein photochemischer Ethylenabbau-Schritt ist, der **durch** die Ultraviolettstrahlungsquelle durchgeführt wird, und wobei die Verweilzeit im Reaktionsinnenraum (4) des Reaktors (1) 0,05 s bis 60 s, insbesondere 0,10 s bis 25 s, ganz besonders 0,15 s bis 0,35 s, beträgt.

2. Verfahren nach Anspruch 1, wobei die Seitenwand (2) eine gerade zylindrische Form aufweist.

3. Verfahren nach Anspruch 2, wobei der Abstand entlang einer Querachse des Reaktors (1), Luftspalt genannt, zwischen der Ultraviolettstrahlungsquelle (7) und der Seitenwand (2) 1 mm bis 499 mm, insbesondere 10 mm bis 250 mm, ganz besonders 20 mm bis 100 mm und noch stärker bevorzugt 39 mm, beträgt.

4. Verfahren nach einem der Ansprüche 1 bis 3, welches ferner eine Schaltuhr umfasst, die dazu ausgebildet ist, die Leistung der Ultraviolettstrahlungsquelle (7) zu variieren.

5. Verfahren nach einem der Ansprüche 1 bis 4, umfassend n
Ultraviolettstrahlungsquellen (7), die entlang der Rotationsachse (Ox) des Reaktors (1) positioniert sind, wobei n eine ganze Zahl größer oder gleich 2 ist.

6. Verfahren nach einem der Ansprüche 1 bis 5, umfassend m
Ultraviolettstrahlungsquellen (7) in einer Ebene (O, y, z) orthogonal zur Rotationsachse (Ox), wobei m eine ganze Zahl größer oder gleich 2 ist.

7. Verfahren nach einem der Ansprüche 1 bis 6, wobei die Ethylenkonzentration in der behandelten Gasatmosphäre weniger als 5 ppm, insbesondere weniger als 2 ppm, ganz besonders weniger als 1 ppm und noch stärker bevorzugt weniger als 0,03 ppm beträgt.

## Claims

1. A process for photochemically treating a gaseous atmosphere of a closed enclosure containing ethylene, said process being implemented in a plant comprising a reactor and the sealed closed enclosure and storing cut fruits, vegetables and/or flowers at temperatures from 0°C to 15°C under the gaseous atmosphere, said reactor (1) comprising:
- a side wall (2) having a cylindrical shape according to an axis of revolution (Ox) and two front walls (3a, 3b), the side wall (2) and the front walls (3a, 3b) delimiting a reaction internal space (4),
- a gas inlet port (5) and a gas outlet port (6), and
- an ultraviolet radiation source (7) in the reaction internal space (4),
said storage chamber being fluidly connected to the gas inlet port (5) and to the gas outlet port (6) of the reactor (1),
the plant being **characterised in that**
the ultraviolet radiation source (7) emits a radiation in the far-ultraviolet range whose spectral domain is comprised between 160 nm and 180 nm and has a variable power, in particular from 10 W to 500 W;
and **in that**
the gas inlet port (5) comprises a portion formed by a cylindrical duct a generatrix of which is tangent to a cross-section of the side wall (2) and enables a tangential inlet of the gaseous atmosphere into the reaction internal space (4) to create a turbulent flow **characterised by** a Reynolds number higher than 5,000 and by a non-zero vortical intensity of the gaseous atmosphere in the reaction internal space (4) for a flow rate of the gaseous atmosphere in the reaction internal space (4) of the reactor (1) from 60 m³/h to 150 m³/h;
said process comprising at least one cycle comprising the following steps of:
a) drawing the gaseous atmosphere from the closed enclosure,
a1) introducing the gaseous atmosphere containing ethylene into the reaction internal space (4) of the reactor (1) via the gas inlet port (5) with a flow rate of the gaseous atmosphere in the reaction internal space (4) of the reactor (1) from 60 m³/h to 150 m³/h so as to create the turbulent flow **characterised by** a Reynolds number higher than 5,000 and by a non-zero vortical intensity of the gaseous atmosphere in the reaction internal space (4) of the reactor (1),
b) treating the gaseous atmosphere to obtain a treated gaseous atmosphere,
b1) extracting the treated gaseous atmosphere via the gas outlet port (6),
c) introducing the treated gaseous atmosphere into the closed enclosure,
**characterised in that** the treatment step b) is a step of petrochemically degrading ethylene carried out by the ultraviolet radiation source and wherein the stay time in the reaction internal space (4) of the reactor (1) is from 0.05 s to 60 s, in particular from 0.10 s to 25 s, most particularly from 0.15 s to 0.35 s.

2. The process according to claim 1, wherein the side wall (2) has a straight cylindrical shape.

3. The process according to claim 2, wherein the distance according to a transverse axis of the reactor (1), so-called air gap, between the ultraviolet radiation source (7) and the side wall (2) is from 1 mm to 499 mm, in particular from 10 mm to 250 mm, more particularly from 20 mm to 100 mm, most particularly 39 mm.

4. The process according to any one of claims 1 to 3, further comprising a programmer adapted to vary the power of the ultraviolet radiation source (7).

5. The process according to any one of claims 1 to 4, comprising n ultraviolet radiation sources (7) positioned according to the axis of revolution (Ox) of the reactor (1), *n* being an integer greater than or equal to 2.

6. The process according to any one of claims 1 to 5, comprising m ultraviolet radiation sources (7) in a plane (O, y, z) orthogonal to the axis of revolution (Ox), m being an integer greater than or equal to 2.

7. The process according to any one of claims 1 to 6, wherein the concentration of ethylene in the treated gaseous atmosphere is lower than 5 ppm, in particular lower than 2 ppm, more particularly lower than 1 ppm, and even more particularly lower than 0.03 ppm.
